# EUROPEAN PATENT APPLICATION

(11) **EP 3 949 726 A1**
(43) Date of publication of application: **09.02.2022**
(21) Application number: 19940358.5
(22) Date of filing: 29.11.2019
(51) Int. Cl.: A01G 31/02, A01C 11/02, B25J 15/06, B25J 15/00

(54) **TRANSPLANTING EQUAL-DISTRIBUTION MECHANISM**

(30) Priority: 06.08.2019 CN 201910721471
(71) Applicant: Fujian Sanan Sino-Science Photobiotech Co., Ltd., Quanzhou, Fujian 362411 (CN)
(72) Inventor: ZHAN, Zhuo, Quanzhou, Fujian 362411 (CN); RAO, Zhenwen, Quanzhou, Fujian 362411 (CN); HUANG, Yangyin, Quanzhou, Fujian 362411 (CN)
(74) Representative: Sach, Greg Robert
(86) International application number: PCT/CN2019/121863
(87) International publication number: WO 2021/022730

(57) **Abstract**

The present invention provides a transplanting equal-dividing mechanism which includes a driving mechanism, a module fixing plate, a robot connecting rod, a linkage and a clamping jaw device, wherein the driving mechanism is disposed above the module fixing plate, a bottom of the module fixing plate is provided with a guide rail, the guide rail is provided with a plurality of sliders thereon, the clamping jaw device is connected below each slider, each clamping jaw device is provided with two linkages on its back surface, and the linkage is rotationally connected to a back of the clamping jaw device. The clamping jaw device is driven by the drive mechanism to achieve automatic separation and aggregation, and the clamping and placing works of plants in the transplanting process are realized by utilizing the clamping and retracting functions of the clamping jaw devices. The application of a plurality of clamping jaws can simultaneously place the plants in the planting tray, so that the transplanting equal-dividing work of the plants can be carries out more quickly, which effectively improves the working efficiency and saves time.

## Description

### FIELD OF THE INVENTION

The present invention relates to the field of plant factories, in particular to a transplanting equal-dividing mechanism.

### BACKGROUND OF THE INVENTION

In plant factories and hydroponic plants, after the hydroponic seedlings are raised in the nursery room, the plants need to be cultivated and planted by manual or machine work, and as the plant grows, the planting density of planting tray adopted in seedling stage can no longer meet the normal needs of plant growth, therefore, it is necessary to transplant the plants in the seedling stage, to move the plants to a planting tray suitable for cultivation in the planting stage. Most of the existing technologies use manual transplanting, which is inefficient and costly, and leaves and seedling roots of plants are easily damaged during manual transplanting, so that the normal growth and development of the plants in the later stage are affected.

Therefore, how to realize the rapid and effective transplanting of plants in the process from seedling raising to transplanting without damaging plant leaves and roots is an urgent problem to be solved by those skilled in the art.

### BRIEF SUMMARY OF THE INVENTION

In order to solve the above technical problem, it is necessary to provide a transplanting mechanism which can improve the transplanting efficiency without damaging plant seedlings.

To solve the above purposes, the present invention provides a transplanting equal-dividing mechanism which includes a driving mechanism, a module fixing plate, a first guide rail, a linkage and a clamping jaw device, wherein the driving mechanism is disposed above the module fixing plate, the first guide rail is disposed at a bottom of the module fixing plate, the first guide rail is provided with a first slider thereon, the clamping jaw device is connected below the first slider, and the linkage is disposed on a back of the clamping jaw device.

Further, the driving mechanism includes a mounting plate, a servo motor, a driving module, a second slider, an equal-dividing connecting plate and an sensing chip, wherein the servo motor is mounted on the module fixing plate, an output shaft of the servo motor is connected with the driving module, the driving module is adjacent to the mounting plate, the mounting plate is provided with a second guide rail, a second slider is slidingly disposed above the second guide rail, the equal-dividing connecting plate is fixedly mounted above the second slider, and the sensing chip is mounted on a side of the equal-dividing connecting plate.

Further, the equal-dividing connecting plate includes a first flat plate and a second flat plate, wherein the first flat plate is fixedly mounted on the second slider, the second flat plate is perpendicular to the first flat plate, one end of the second flat plate is fixedly connected with the first flat plate, and the other end of the second flat plate is fixedly connected with the clamping jaw device.

Further, the number of the clamping jaw devices is n, where n≥2.

Further, the number of the first sliders corresponds to the number of the clamping jaw devices. This allows each slider to be matched to a corresponding clamping jaw device.

Further, the number of the linkages is 2n-1, where n≥2.

Further, the clamping jaw device includes a cylinder fixing plate, an air pipe joint, a clamping jaw cylinder and a clamping jaw, wherein the cylinder fixing plate is fixedly connected to the first slider, one end of a back of the cylinder fixing plate is flush with one end of a back of the module fixing plate, the clamping jaw cylinder is fixedly mounted below the cylinder fixing plate, the air pipe joint is mounted on a side of the clamping jaw cylinder, and the clamping jaw is disposed below the clamping jaw cylinder.

Further, one end of the linkage is rotationally connected with the back of the cylinder fixing plate, the other end of the connecting rod is rotationally connected with the linkage on an adjacent cylinder fixing plate, and a right adjacent clamping jaw slider is locked and fixed by screws from the module fixing plate, and the clamping jaws fixed at this position serve as a reference of equal spacing. By connecting all the cylinder fixing plates through the linkage, it is possible to realize that one cylinder fixing plate drives other cylinder fixing plates to move when moving, thereby realizing the transplanting function of the transplanting equal-dividing mechanism.

Further, the transplanting equal-dividing mechanism further includes a robot connecting rod disposed at a middle position above the module fixing plate. By disposing the robot connecting rod in the middle position of the module fixing plate, the transplanting mechanism is capable of automatically shifting its position during planting work.

Unlike the prior art, the present invention has the following beneficial effects:
(1) by setting a driving mechanism, the present invention realizes the automatic separation and aggregation between each clamping jaw device driven by the driving mechanism, which prepares the work for further realization of transplanting of plants, makes it possible to finish transplanting of plants more quickly, saves time and improves the efficiency of transplanting of plants.
(2) By connecting a plurality of linkages on the back of the clamping jaw device, the present invention realizes equidistant separation and aggregation of a plurality of clamping jaw devices driven the equal-dividing connecting plate, thereby realizing transplanting equal-dividing of plants.
(3) By providing a plurality of clamping jaw devices, the present invention realizes clamping and placing works of plants in the transplanting process by utilizing the clamping and retracting functions of the clamping jaw devices. The application of a plurality of clamping jaws can simultaneously place the plants in the planting tray, so that the transplanting equal-dividing work of the plants can be carries out more quickly, which effectively improves the working efficiency and saves time.
(4) The transplanting equal-dividing mechanism device can realize the transformation of different spacing, correspondingly can match and adapt to the requirements of the transplanting with different hole spacing, and the mechanism structure is simple, the equal-dividing spacing is accurate, and the cost is low.

### BRIEF DESCRIPTION OF THE FIGURES

Fig. 1 is a stereoscopic exploded structural schematic diagram of a transplanting equal-dividing mechanism;
Fig. 2 is an overall structural schematic diagram of the transplanting equal-dividing mechanism;
Fig. 3 is a rear view of the transplanting equal-dividing mechanism.

### Description of reference signs:

1. module fixing plate; 2. robot connecting rod; 3. servo motor; 4. driving module; 5. equal-dividing connecting plate; 6. sensing chip; 7. sensor; 8. linkage; 9. clamping jaw; 10. clamping jaw cylinder; 11. air pipe joint; 12. cylinder fixing plate; 13. bearing; 14. linkage shaft; 15. guide rail; 16. slider.

### DETAILED DESCRIPTION OF THE INVENTION

Embodiments of the present invention are described below by way of specific examples, and other advantages and effects of the present invention will be readily apparent to those skilled in the art from the disclosure of this description. The present invention may also be practiced or applied by other different embodiments, and the details of this description may be modified or changed in various ways without departing from the spirit of the present invention, based on different views and applications.

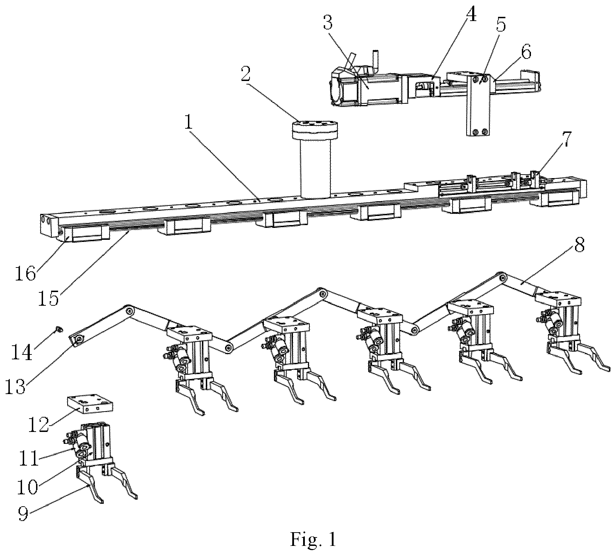

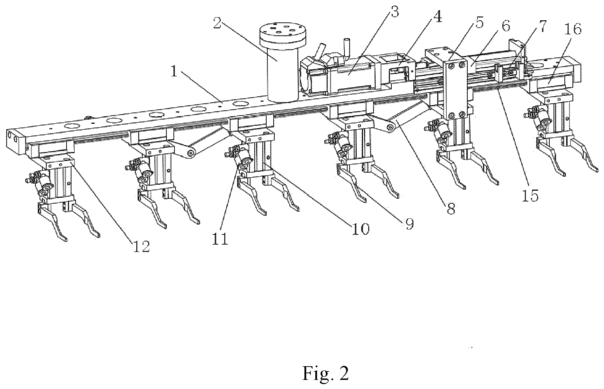

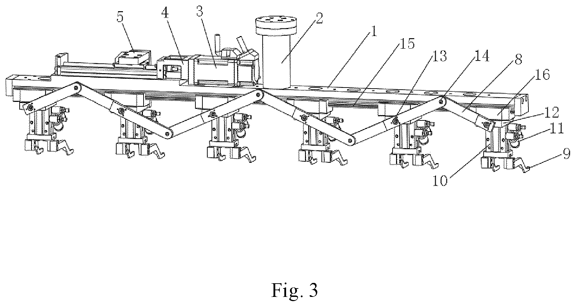

Referring to Figs. 1- 3, the embodiment discloses a transplanting equal-dividing mechanism, which specifically includes a driving mechanism, a module fixing plate 1, a robot connecting rod 2, a guide rail mounted below the module fixing plate 1, a linkage 8 and a clamping jaw device. The robot connecting rod 2 is fixedly mounted directly above the module fixing plate 1, and the module fixing plate 1 moves under the drive of the robot connecting rod, so as to realize the transplanting equal-dividing work of plants.

The driving mechanism of the transplanting equal-dividing mechanism includes a mounting plate, a servo motor 3, a driving module 4, a slider, an equal-dividing connecting plate 5 and a sensing chip 6, the servo motor 3 and the mounting plate are fixedly mounted on the module fixing plate 1, an output shaft of the servo motor 3 is connected with the driving module 4, the driving module 4 is adjacent to the mounting plate, the mounting plate is provided with a columnar guide rail, the slider is disposed above the guide rail, the equal-dividing connecting plate 5 is composed of two flat plates, namely, a first plate and a second plate, the first plate is a plate disposed parallel to the mounting plate, the first plate is fixedly mounted on the slider and reciprocates with the slider under the drive of the driving module 4, the second flat plate is perpendicular to the first flat plate, and an upper end of the second flat plate is fixedly connected with the first flat plate, the other end of the second flat plate is fixedly connected with the last clamping jaw device which is slidingly disposed on the module fixing plate 1, and moves together with the slider under the drive of the driving module 4 to drive the clamping jaw device to move. The sensing chip 6 is fixedly mounted on a side of the first flat plate of the equal-dividing connecting plate 5. One end of the module fixing plate 1, which is provided with a driving mechanism, is provided with a set of sensors 7, wherein a middle sensor is an origin position of the driving module, and left and right sensors are the left and right limit positions of the driving module. When the clamping jaw device is driven by the driving mechanism and moves together with the equal-dividing connecting plate 5 to the set equal-dividing spacing position, the equal-dividing mechanism performs the transplanting work.

A guide rail 15 is disposed below the module fixing plate 1, six sliders 16 are disposed on the guide rail 15, wherein a slider 16 remote from the sensor 7 is fixedly disposed on the guide rail 15, each slider 16 is fixedly provided with a clamping jaw device, the clamping jaw device includes a cylinder fixing plate 12, an air pipe joint 11, a clamping jaw cylinder 10 and a clamping jaw 9, the cylinder fixing plate 12 is fixedly connected to the slider 16, a back end of the cylinder fixing plate 12 is flush with a back end of the module fixing plate, the jaw cylinder 10 is fixedly mounted below the cylinder fixing plate 12, the air pipe joint 11 is mounted on a side of the jaw cylinder 10, and the clamping jaw 9 is disposed below the clamping jaw cylinder 10. The back surface of each clamping jaw 9 device is connected with a linkage 8, one end of the linkage 8 is rotationally connected to a back side of the cylinder fixing plate, and the other end is rotationally connected with the linkage 8 on the adjacent cylinder fixing plate 12 in cooperation with the linkage shaft 14 through the bearing 13, so that the linkage can be telescoped under the drive of the driving mechanism, and the transplanting equal-dividing function of the clamping jaw device is further realized.

The operation principle of this device is as follows: in the process that the clamping jaw device moves to a preset position under the drive of the driving mechanism, firstly, the module fixing plate rotates to the preset position under the drive of the robot connecting rod, while the driving module cooperates with the sensor to push the slider in the driving module to move, secondly, the equal-dividing connecting plate connected to the slider in the driving module drives the clamping jaw devices connected by the linkage to move back and forth, under the action of the linkage, the clamping jaw device realizes aggregation and equidistant separation, when the clamping jaw device reaches the preset position, the clamping jaw in the clamping jaw device realizes such an action of clamping and retracting under the action of the clamping jaw cylinder and the air pipe joint, thus completing the work of clamping and placing plants in the transplanting process.

It should be noted that relational terms such as first and second are used herein only to distinguish one entity or operation from another and do not necessarily require or imply any such actual relationship or order between these entities or operations. Moreover, the terms "comprise", "include" or any other variation thereof are intended to encompass non-exclusive inclusion, so that a process, method, article or terminal equipment that includes a set of elements includes not only those elements but also other elements that are not explicitly listed, or also elements inherent to such a process, method, article or terminal equipment. In the absence of further limitations, the elements defined by the sentences "comprising ..." or "including ..." do not exclude the existence of other elements in the process, method, article or terminal equipment including the elements. In addition, in this paper, "greater than", "less than", "more than", etc. are understood to exclude this number; "above", "below" and "within" are understood to include this number.

While the above various embodiments are already described, once those skilled in the art understand basic creative concept, they can make additional modification and alteration for these embodiments. The above description is only the embodiments of the present invention and does not limit the patent scope of the present invention, any equivalent structure or equivalent process modification used according to the contents of the description and accompanying drawings in the present invention, no matter whether it is directly or indirectly used in any other related technical field, should be included within the protection scope of the present invention.

## Claims

1. A transplanting equal-dividing mechanism, wherein the transplanting equal-dividing mechanism comprises: a driving mechanism, a module fixing plate, a first guide rail, a linkage and a clamping jaw device, wherein the driving mechanism is disposed above the module fixing plate, the first guide rail is disposed at a bottom of the module fixing plate, the first guide rail is provided with a first slider thereon, the clamping jaw device is connected below the first slider, and the linkage is disposed on a back of the clamping jaw device.

2. The transplanting equal-dividing mechanism according to claim 1, wherein the driving mechanism comprises a mounting plate, a servo motor, a driving module, a second slider, an equal-dividing connecting plate and an sensing chip, wherein the servo motor is mounted on the module fixing plate, an output shaft of the servo motor is connected with the driving module, the driving module is adjacent to the mounting plate, the mounting plate is provided with a second guide rail, a second slider is slidingly disposed above the second guide rail, the equal-dividing connecting plate is fixedly mounted above the second slider, and the sensing chip is mounted on a side of the equal-dividing connecting plate.

3. The transplanting equal-dividing mechanism according to claim 2, wherein the equal-dividing connecting plate comprises a first flat plate and a second flat plate, wherein the first flat plate is fixedly mounted on the second slider, the second flat plate is perpendicular to the first flat plate, one end of the second flat plate is fixedly connected with the first flat plate, and the other end of the second flat plate is fixedly connected with the clamping jaw device.

4. The transplanting equal-dividing mechanism according to claim 1, wherein the number of the clamping jaw devices is n, where n≥2.

5. The transplanting equal-dividing mechanism according to claim 1, wherein the number of the first sliders corresponds to the number of the clamping jaw devices.

6. The transplanting equal-dividing mechanism according to claim 1, wherein the number of the linkages is 2n-1, where n≥2.

7. The transplanting equal-dividing mechanism according to claim 1, wherein the clamping jaw device comprises a cylinder fixing plate, an air pipe joint, a clamping jaw cylinder and a clamping jaw, wherein the cylinder fixing plate is fixedly connected to the first slider, one end of a back of the cylinder fixing plate is flush with one end of a back of the module fixing plate, the clamping jaw cylinder is fixedly mounted below the cylinder fixing plate, the air pipe joint is mounted on a side of the clamping jaw cylinder, and the clamping jaw is disposed below the clamping jaw cylinder.

8. The transplanting equal-dividing mechanism according to claim 7, wherein one end of the linkage is rotationally connected with the back of the cylinder fixing plate, the other end of the connecting rod is rotationally connected with the linkage on an adjacent cylinder fixing plate.

9. The transplanting equal-dividing mechanism according to claim 1, wherein the transplanting equal-dividing mechanism further includes a robot connecting rod disposed above the module fixing plate.
